# EUROPÄISCHE PATENTSCHRIFT

(11) **EP 2 932 127 B1**
(45) Veröffentlichungstag und Bekanntmachung des Hinweises auf die Patenterteilung: **19.10.2016**
(21) Anmeldenummer: 13821437.4
(22) Anmeldetag: 10.12.2013
(51) Int. Cl.: F16D 13/75

(54) **KUPPLUNGSVORRICHTUNG**
CLUTCH DEVICE
DISPOSITIF D'EMBRAYAGE

(30) Priorität: 13.12.2012 DE 102012222998
(43) Veröffentlichungstag der Anmeldung: 21.10.2015
(73) Patentinhaber: Schaeffler Technologies AG & Co. KG, 91074 Herzogenaurach (DE)
(72) Erfinder: NACHTMANN, Florian, F-67100 Straßburg (FR); VOGEL, Felix, 76547 Sinzheim (DE); RUDER, Willi, 77933 Lahr (DE)
(86) Internationale Anmeldenummer: PCT/DE2013/200345
(87) Internationale Veröffentlichungsnummer: WO 2014/090249

(56) Entgegenhaltungen:
- WO-A1-2014/063697
- DE-A1-102011 085 836
- DE-A1-102012 203 468
- FR-A1- 2 765 288

## Beschreibung

Die vorliegende Erfindung betrifft eine Kupplungsvorrichtung, insbesondere eine Zuschaltkupplung für einen Verbrennungsmotor eines Hybridfahrzeugs gemäß dem Oberbegriff des Anspruchs 1.

Aus der älteren, nicht vorveröffentlichten DE 10 2012 207 325 A1.1 ist eine als Zuschaltkupplung für einen Verbrennungsmotor eines Hybridfahrzeugs ausgebildete Kupplungsvorrichtung mit einer Gegendruckplatte, einer in axialer Richtung begrenzt verlagerbaren Anpressplatten zur reibschlüssigen Klemmung einer Kupplungsscheibe zwischen der Anpressplatte und der Gegendruckplatte, einem auf die Anpressplatte wirkenden Hebelelement zur Verlagerung der Anpressplatte in axialer Richtung und einer Betätigungseinrichtung bekannt. Die Betätigungseinrichtung weist eine Statoreinrichtung, eine bezüglich der Statoreinrichtung verdrehbare Rotoreinrichtung und eine bezüglich der Rotoreinrichtung in axialer Richtung begrenzt verlagerbare, Zug- und Schubkräfte aufbringende Schlitteneinrichtung auf. Zwischen der Rotoreinrichtung und der Schlitteneinrichtung ist ein Wälzkörpergewindetrieb mit einer Mehrzahl von Windungen und einem Wälzkörperumlauf mit in einer Wälzkörperrinne laufenden Wälzkörpern vorgesehen. Die Wälzkörperrinne weist einen derart ausgebildeten Spurwechselbereich auf, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen.

Aus der FR 2 765 288 A1 ist eine Kupplungsvorrichtung gemäß dem Oberbegriff des Anspruchs 1 bekannt.

Bezüglich weiteren Standes der Technik wird auf die DE 10 2012203 468 A1 und die DE 10 2011 085 836 A1 verwiesen.

Es ist Aufgabe der vorliegenden Erfindung, eine Kupplungsvorrichtung mit einer langen Lebensdauer anzugeben, die insbesondere als Zuschaltkupplung für einen Verbrennungsmotor eines Hybridfahrzeugs geeignet ist.

Diese Aufgabe wird mit den in Anspruch 1 angegebenen Maßnahmen gelöst.

Weitere vorteilhafte Ausgestaltungen der vorliegenden Erfindung sind Gegenstand der abhängigen Ansprüche.

Eine Kupplungsvorrichtung weist eine Gegendruckplatte, eine in axialer Richtung begrenzt verlagerbare Anpressplatte zur reibschlüssigen Klemmung einer Kupplungsscheibe zwischen der Anpressplatte und der Gegendruckplatte, ein auf die Anpressplatte wirkendes Hebelelement zur Verlagerung der Anpressplatte in axialer Richtung, einen zumindest teilweise zwischen der Anpressplatte und dem Hebelelement angeordneten Zentralflansch mit zumindest einer Durchgriffsmöglichkeit für die Anpressplatte und/oder das Hebelelement, und eine Verschleißnachstelleinrichtung zur automatischen Nachstellung von Kupplungsverschleiß auf, wobei zur Verhinderung einer ungewollten Nachstellung von Kupplungsverschleiß das Hebelelement mit dem Zentralflansch in Anlage bringbar ist. Insbesondere ist die Kupplungsvorrichtung als Zuschaltkupplung für einen Verbrennungsmotor eines Hybridfahrzeugs ausgebildet.

Da aufgrund des Reibschlusses sowohl Reibbeläge der Kupplungsscheibe als auch in geringerem Maße Reibflächen der Gegendruckplatte und der Anpressplatte einem Verschleiß unterworfen sind, muss über die Lebensdauer der Kupplungsvorrichtung die Anpressplatte immer näher an die Gegendruckplatte heranbewegt werden, um die Abnahme der Dicke der Reibbeläge und der Stärke der Reibflächen in axialer Richtung zu kompensieren und den Reibschluss herstellen bzw. die Kupplungsvorrichtung einrücken zu können. Hierzu ist die Kupplungsvorrichtung mit der Verschleißnachstelleinrichtung zur automatischen Nachstellung von Kupplungsverschleiß ausgestattet, wobei die Verschleißnachstelleinrichtung vorzugsweise als kraftbasierte Verschleißnachstelleinrichtung ausgebildet ist. Um bei der automatischen Verschleißnachstelleinrichtung eine ungewollte Verschleißnachstellung, beispielsweise aufgrund von Überweg oder Axialschwingungen der Anpressplatte, zu verhindern, ist das Hebelelement mit dem Zentralflansch in Anlage bringbar. Insbesondere wird bei kraftbasierten Verschleißnachstelleinrichtungen dadurch das Durchlaufen des zweiten Regelpunkts verhindert.

Die Kupplungsvorrichtung weist eine Betätigungseinrichtung mit einer Statoreinrichtung, einer bezüglich der Statoreinrichtung verdrehbaren Rotoreinrichtung und einer bezüglich der Rotoreinrichtung in axialer Richtung begrenzt verlagerbaren, Zug- und Schubkräfte aufbringenden Schlitteneinrichtung auf, die sich mit einer auf das Hebelelement Zug- und Schubkräfte aufbringenden Zug- und Schubeinrichtung in Wirkverbindung befindet. Somit ist es möglich, sowohl Zug- als auch Schubkräfte auf das Hebelelement aufzubringen, wobei die Kupplungsvorrichtung beispielsweise durch Schubkräfte ausgerückt werden kann, während durch Zugkräfte die Drehmomentkapazität der Kupplungsvorrichtung kurzzeitig erhöht werden kann, indem das Kraftniveau der Anpressplatte erhöht wird, wodurch die Kupplungsscheibe stärker zwischen der Anpressplatte und der Gegendruckplatte geklemmt wird. Insgesamt kann die Kupplungsvorrichtung daher im Normalbetrieb auf ein geringeres Drehmoment ausgelegt werden, und Drehmomentspitzen können mit der besagten Zug- und Schubeinrichtung abgefangen werden.

Vorzugsweise ist das Hebelelement im Wesentlichen ringförmig ausgebildet. Ferner weist das Hebelelement vorzugsweise in radialer Richtung innen angeordnete Zungen auf, die mit dem Zentralflansch in Anlage bringbar sind. Da somit die Anlage auf einem besonders kleinen Radius stattfinden kann, kann die Kupplungsvorrichtung besonders kompakt ausgebildet werden.

Es ist von Vorteil, wenn die Betätigungseinrichtung am Zentralflansch drehbar gelagert ist. Der Zentralflansch weist im Bereich der Lagerung, vorzugsweise im Bereich eines Zentrallagers, einen in axialer Richtung vorspringenden Abschnitt auf, mit dem das Hebelelement in Anlage bringbar ist. Dies ermöglicht einen besonders kompakten Aufbau der Kupplungsvorrichtung.

Gemäß einem weiteren bevorzugten Ausführungsbeispiel weist die Zug- und Schubeinrichtung zumindest eine Aussparung auf, durch die das Hebelelement mit dem Zentralflansch in Anlage bringbar ist. Bei kompaktem Aufbau der Kupplungsvorrichtung kann somit besonders zuverlässig eine ungewollte Nachstellung von Kupplungsverschleiß verhindert werden.

Vorzugsweise weist die Zug- und Schubeinrichtung zumindest ein Zugelement und zumindest ein Schubelement auf, zwischen denen das Hebelelement aufnehmbar ist, und die miteinander verbindbar sind. Bei kompaktem Aufbau der Kupplungsvorrichtung kann auf diese Art und Weise die Montage der Kupplungsvorrichtung vereinfacht werden.

Das Hebelelement weist vorzugsweise eine Schnappfedercharakteristik auf. Hierbei durchfährt das Hebelelement beispielsweise im ausgerückten Zustand der Kupplungsvorrichtung einen negativen Kraftbereich, wobei die Ausrückkraft abgesenkt wird. Um den Einrückvorgang einzuleiten und den negativen Kraftbereich zu verlassen, kann das Hebelelement durch das Zugelement beaufschlagt, das heißt gezogen, werden.

Gemäß einem weiteren bevorzugten Ausführungsbeispiel weist das Zugelement zumindest eine Aussparung auf, durch die das Hebelelement mit dem Zentralflansch in Anlage bringbar ist. Insbesondere ist es von Vorteil, wenn diese Aussparung im Bereich des oder der freien Enden der Zunge bzw. der Zungen des Hebelelements ausgebildet ist.

Vorzugsweise sind das Zugelement und das Schubelement, vorzugsweise mittels mehrerer in Umfangsrichtung verteilt angeordneter Schraube-Hülse-Verbindungen, lösbar miteinander verbunden. Der Ausdruck "lösbar" beinhaltet in diesem Zusammenhang insbesondere "zerstörungsfrei lösbar". Durch diese Art des Aufbaus ist es möglich, die Betätigungseinrichtung auf einfache Art und Weise zu demontieren und insbesondere von der restlichen Kupplungsvorrichtung zu trennen, beispielsweise wenn bei der Montage ein Fehler aufgetreten ist, oder wenn ein Reparaturfall dies erfordert.

Es ist von Vorteil, wenn das Zugelement mehrere in Umfangsrichtung verteilt angeordnete Aussparungen aufweist, durch die das Hebelelement mit dem Zentralflansch in Anlage bringbar ist, und die zwischen den Schraube-Hülse-Verbindungen angeordnet sind. Auch dies ermöglicht einen besonders kompakten Aufbau der Kupplungsvorrichtung.

Insbesondere ist es von Vorteil, wenn zwischen der Rotoreinrichtung und der Schlitteneinrichtung ein Wälzkörpergewindetrieb mit zumindest drei Windungen und einem Wälzkörperumlauf mit in einer Wälzkörperrinne laufenden Wälzkörpern vorgesehen ist, wobei die Wälzkörperrinne einen derart ausgebildeten Spurwechselbereich aufweist, dass Wälzkörper in Umfangsrichtung vor dem Spurwechselbereich zwischen einer ersten und einer zweiten Windung laufen, und Wälzkörper in Umfangsrichtung nach dem Spurwechselbereich zwischen der zweiten und einer dritten Windung laufen. Auf diese Art und Weise ist es insbesondere möglich, gleich große Kräfte in Zug- und Schubrichtung zu erzeugen.

Zusätzlich zum mit Wälzkörper gefüllten, ringförmigen Wälzkörperumlauf weist die Rotoreinrichtung ein Joch auf. Das Joch der Rotoreinrichtung ist drehbar über ein Stützlager, insbesondere über ein Radiallager, mittelbar oder unmittelbar an der Statoreinrichtung abgestützt.

Vorzugsweise bilden die Statoreinrichtung und die bezüglich der Statoreinrichtung verdrehbare Rotoreinrichtung einen Elektromotor. Der Elektromotor ist vorzugsweise als bürstenloser Gleichstrommotor oder als Drehstrommotor ausgebildet, bei dem Magnete, genauer gesagt Permanentmagnete, rotorseitig und wechselweise bestrombare Windungen statorseitig vorgesehen sind. Gemäß einem bevorzugten Ausführungsbeispiel ist der Elektromotor als Außenläufer ausgebildet, das heißt, weist in seinem Inneren die Statoreinrichtung auf, die von der ringförmigen, drehbaren Rotoreinrichtung umgeben ist. Jedoch kann der Elektromotor auch als Innenläufer ausgebildet sein.

Die Betätigungseinrichtung ist über eine Stromzufuhr bestrombar und vorzugsweise derart im Antriebsstrang des Kraftfahrzeugs gelagert, dass sie ausschließlich zum Einrücken und Ausrücken der Kupplungsvorrichtung bestromt werden muss. Durch den Wälzkörpergewindetrieb, der in Wirkrichtung zwischen der Rotoreinrichtung und der Schlitteneinrichtung angeordnet ist, wird eine rotatorische Bewegung der Rotoreinrichtung in eine translatorische Bewegung der Schlitteneinrichtung umgesetzt. Der Wälzkörpergewindetrieb ist vorzugsweise selbsthemmend ausgebildet. Über ein Ausrücklager, das beispielsweise als Schrägkugellager ausgebildet ist, aber auch als Kegelrollenlager, zylindrisches Rollenlager oder Gleitlager ausgebildet sein kann, kann die Schlitteneinrichtung mittels der teilbaren Zug- und Schubeinrichtung Zug- und Schubkräfte auf das Hebelelement der Kupplungsvorrichtung aufbringen.

Beispielsweise kann die Statoreinrichtung drehfest mit einem Trägerbauteil, insbesondere mit einem Gehäuseträger, ausgebildet sein, so dass die Stromzufuhr zur Statoreinrichtung mittels Kabel und ohne Drehdurchführung oder induktive Kopplung möglich ist. In radialer Richtung innerhalb der Statoreinrichtung bzw. innerhalb des Trägerbauteils verläuft die Eingangswelle der Kupplung bzw. die Abtriebswelle des Verbrennungsmotors. Die Eingangswelle ist bezüglich der Statoreinrichtung bzw. des Trägerbauteils drehbar gelagert.

Jedoch ist es auch möglich, dass die Statoreinrichtung drehfest auf der Eingangswelle der Kupplung angeordnet ist, das heißt sich mit der Drehzahl des Verbrennungsmotors dreht. In diesem Fall ist eine Drehdurchführung oder eine induktive Kopplung zur Bestromung der Betätigungseinrichtung erforderlich. Die Bestromung der Betätigungseinrichtung in eine Richtung erzeugt im Vergleich zur Eingangsdrehzahl des Antriebsstrangs eine erhöhte Drehzahl der Rotoreinrichtung, wodurch die Kupplungsvorrichtung ausgerückt wird. Die Bestromung der Betätigungseinrichtung in die andere Richtung erzeugt eine im Vergleich zur Eingangsdrehzahl des Antriebsstrangs verringerte Drehzahl der Rotoreinrichtung, wodurch die Kupplungsvorrichtung eingerückt wird. Daher kann der Ausrückvorgang der Kupplungsvorrichtung über eine Beschleunigung der Rotoreinrichtung eingeleitet werden, während der Einrückvorgang der Kupplungsvorrichtung über ein Abbremsen der Rotoreinrichtung eingeleitet wird. Ebenso ist es auch möglich, dass der Ausrückvorgang der Kupplungsvorrichtung durch ein Abbremsen der Rotoreinrichtung eingeleitet wird, während der Einrückvorgang der Kupplungsvorrichtung durch eine Beschleunigung der Rotoreinrichtung eingeleitet wird.

Gemäß einem bevorzugten Ausführungsbeispiel weist der Wälzkörpergewindetrieb eine Außenhülse auf, in die eine Formfeder eingesetzt ist, die eine Mehrzahl von Windungen aufweist. Die Formfeder ist insbesondere aus einem schraubenförmig gewundenen Federdraht ausgebildet, wobei in einer bevorzugten Ausgestaltung der gewundene Federdraht konturiert ist, das heißt in axialer Richtung auf beiden Seiten mit einer Anlagekontur versehen ist, die durch einen dazwischen liegenden Kamm getrennt ist. Die benachbarten Anlagekonturen zweier aufeinander folgender Windungen der Formfeder bilden einen Teil der Oberflächengeometrie des Wälzkörpers ab, so dass der jeweilige Wälzkörper in axialer Richtung in einer in Umfangsrichtung verlaufenden Spur zwischen zwei benachbarten Windungen der Formfeder geführt werden kann.

Die Außenhülse ist zur Lagerung der Formfeder mittels eines Deckels abgeschlossen, der mit der Außenhülse durch mehrere in Umfangsrichtung verteilt angeordnete Schrauben verschraubt ist. Zwischen dem Deckel und der Außenhülse ist vorzugsweise eine Ausgleichsscheibe vorgesehen. Ausgleichsscheiben gibt es in unterschiedlicher Stärke, um im Betrieb der Betätigungseinrichtung einerseits die weitestgehende Spielfreiheit des Wälzkörpergewindetriebs in axialer Richtung und andererseits die Leichtgängigkeit und insbesondere die Klemmfreiheit des Wälzkörpergewindetriebs sicherzustellen. Mittels der passenden Ausgleichsscheibe ist daher beim Zusammenbau der Betätigungseinrichtung die axiale Länge des Raums, in dem die schraubenförmige Formfeder angeordnet ist, exakt einzustellen.

Der Raum, in dem die Formfeder angeordnet ist, ist in axialer Richtung auf beiden Seiten durch jeweils eine Dichtung nach außen hin abgegrenzt. Jede der beiden Dichtungen, von denen eine außenhülsenseitig und die andere deckelseitig vorgesehen ist, ist gleitbeweglich mit jeweils einer Innenhülse in Anlage, um die translatorische Bewegung der Schlitteneinrichtung zu ermöglichen. Der Raum zwischen den beiden Dichtungen ist vorzugsweise mit Fett gefüllt, das heißt als Fettraum ausgebildet, um die Reibung des Wälzkörpergewindetriebs zu minimieren und ein Verklemmen der Wälzkörper zu verhindern.

Es ist von Vorteil, wenn die zweite Windung den Spurwechselbereich ausschließlich im Bereich einer größten Tiefe der Wälzkörperrinne kreuzt. Die Tiefe der Wälzkörperrinne ist in radialer Richtung der Betätigungseinrichtung bzw. der Kupplungsvorrichtung zu bestimmen. Somit kann ein Verklemmen der Wälzkörper beim Kreuzen der zweiten Windung der Formfeder zuverlässig verhindert werden.

Vorzugsweise sind die Wälzkörper als Kugeln ausgebildet. Die Wälzkörperrinne ist vorzugsweise als umlaufende Kugelrinne ausgebildet. In einem Tragbereich ist die Kugelrinne vorzugsweise im Wesentlichen U-förmig ausgebildet, wobei die Kugeln im Wesentlichen mit der Hälfte ihres Durchmessers in radialer Richtung der Betätigungseinrichtung in die Kugelrinne eintauchen. Weiterhin ist es von Vorteil, wenn die Tiefe des Spurwechselbereichs im Wesentlichen gleich dem, vorzugsweise größer als der, Durchmesser der Kugeln ist. Dies bedeutet, dass im Spurwechselbereich die Kugeln in radialer Richtung der Betätigungseinrichtung zumindest nahezu vollständig in die Kugelrinne eintauchen können. Die Eintauchtiefe muss mindestens so groß sein, dass die Kugeln von der zwischen der in axialer Richtung der Betätigungseinrichtung zwischen der ersten und zweiten Windung angeordneten Spur zu der in axialer Richtung zwischen der zweiten und dritten Windung angeordneten Spur wechseln können, ohne dabei die zweite Windung, insbesondere den Kamm der Formfeder im Bereich der zweiten Windung, zu berühren. Dies sollte auch sichergestellt sein, wenn die Schlitteneinrichtung während des Betriebs der Betätigungseinrichtung verkippt, so dass es insbesondere von Vorteil ist, wenn die Kugeln im Spurwechselbereich vollständig in die Kugelrinne eintauchen können, das heißt, wenn der Durchmesser der Kugeln zumindest der Tiefe des Spurwechselbereichs in radialer Richtung der Betätigungseinrichtung entspricht. Vorzugsweise ist der Durchmesser kleiner als die Tiefe des Spurwechselbereichs.

In einem bevorzugten Ausführungsbeispiel ist bei einem als Außenläufer ausgebildeten Elektromotor der Wälzkörperumlauf im Außenumfang der Rotoreinrichtung angeordnet, während dementsprechend die Formfeder, zwischen deren Windungen die Wälzkörper laufen, radial außerhalb angeordnet und als innenkonturierte Formfeder ausgebildet ist, wobei sowohl der Kamm als auch die Anlagekonturen für die Wälzkörper in radialer Richtung nach innen weisen. Dementsprechend weist die Rotoreinrichtung die umlaufende Wälzkörperrinne in ihrem Außenumfang auf. Jedoch ist es auch möglich, beispielsweise bei der Ausbildung des Elektromotors als Innenläufer, den Wälzkörperumlauf im Innenumfang einer Rotoreinrichtung vorzusehen, und dementsprechend die Formfeder radial innerhalb anzuordnen und als außenkonturierte Formfeder auszubilden. Dementsprechend weist die Rotoreinrichtung die umlaufende Wälzkörperrinne in ihrem Innenumfang auf.

Die Kupplungsvorrichtung kann einerseits als Einzelkupplung ausgebildet sein, kann jedoch auch als Mehrfachkupplung, insbesondere als Doppelkupplung, ausgebildet sein. Bei einer Doppelkupplung sind vorzugsweise zwei Betätigungseinrichtungen der vorgenannten Art vorzusehen. Insbesondere kann die Reibungskupplung auch als Zuschaltkupplung zum Zu- und Abkoppeln des Verbrennungsmotors an einen und von einem Antriebsstrang eines Hybridfahrzeugs ausgebildet sein, um beispielsweise beim rein elektrischen Fahren Trägheitsmomente und Reibung durch Abkoppeln des Verbrennungsmotors zu minimieren.

Die Kupplungsvorrichtung kann sowohl als Trockenkupplung als auch als Nasskupplung ausgebildet sein. Bei der Kupplungsvorrichtung kann es sich einerseits um eine im betätigungsfreien Zustand eingerückte, das heißt normal-eingerückte Kupplung, oder andererseits um eine im betätigungsfreien Zustand ausgerückte, das heißt normal-ausgerückte Kupplung, handeln. Bei einer normal-eingerückten Kupplung ist das Hebelelement, auf das die Betätigungseinrichtung wirkt, üblicherweise als Tellerfeder ausgebildet, während bei einer normal-ausgerückten Kupplung das Hebelelement, auf das die Betätigungseinrichtung wirkt, üblicherweise als Hebelfeder ausgebildet ist.

Die vorliegende Erfindung wird nachfolgend anhand von bevorzugten Ausführungsbeispielen in Verbindung mit den zugehörigen Figuren näher erläutert. In diesen zeigen:
- Figur 1: ein Ausführungsbeispiel einer Kupplungsvorrichtung mit einer Betätigungs einrichtung, die eine Zug- und Schubeinrichtung aufweist, in einer Schnittansicht,
- Figur 2: ein Zugelement der Zug- und Schubeinrichtung aus Figur 1 in einer Schnittansicht, und
- Figur 3: das Zugelement aus Figur 2 in einer halben Draufsicht.

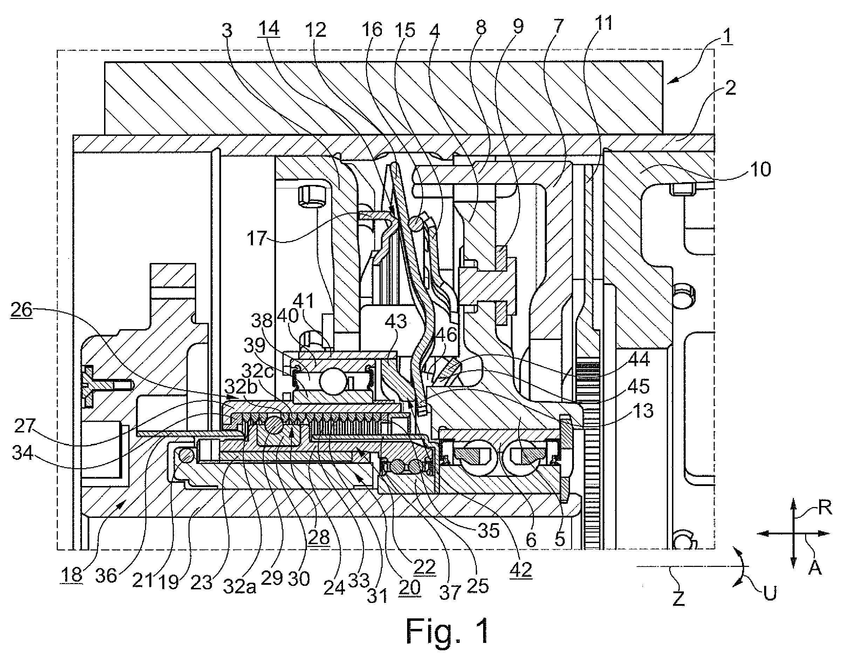

Die Figuren 1 bis 3 betreffen ein Ausführungsbeispiel einer Kupplungsvorrichtung 1 mit einer Betätigungseinrichtung 18 für ein Kraftfahrzeug. Insbesondere betreffen die Figuren 1 bis 3 eine Zuschaltkupplung für einen Verbrennungsmotor eines Hybridfahrzeugs. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele der Kupplungsvorrichtung 1, die Teilkombinationen der im Folgenden zu erläuternden Merkmale aufweisen.

Die Kupplungsvorrichtung 1 ist drehbar um eine Drehachse Z gelagert und weist zumindest eine Anpressplatte 7, zumindest eine Gegendruckplatte 10 und zumindest eine in axialer Richtung A der Kupplungsvorrichtung 1 zwischen der Anpressplatte 7 und der Gegendruckplatte 10 angeordnete Kupplungsscheibe 11 auf. Die Gegendruckplatte 10 ist mit einem Gehäusebauteil 2 der Kupplungsvorrichtung 1 fest verbunden, insbesondere verschraubt, verstiftet oder verzahnt, kann aber auch einteilig mit dem Gehäusebauteil 2 ausgebildet sein. Die Anpressplatte 7 ist im Gehäusebauteil 2 drehfest gelagert und in axialer Richtung A begrenzt verlagerbar. Insbesondere ist die Anpressplatte 7 mittels mehrerer, in Umfangsrichtung U der Kupplungsvorrichtung 1 verteilt angeordneter Blattfedern 9 drehfest im Gehäusebauteil 2 befestigt und von der Gegendruckplatte 10 weg vorgespannt.

Die Blattfedern 9 können zur Übertragung des Drehmoments auf die Anpressplatte 7 und zur Vorspannung der Anpressplatte 7 am Gehäusebauteil 2 oder an der Gegendruckplatte 10 befestigt sein, sind im dargestellten Ausführungsbeispiel aber vorzugsweise an einem Zentralflansch 4 der Kupplungsvorrichtung 1 befestigt. Im dargestellten Ausführungsbeispiel ist der Zentralflansch 4 innerhalb des Gehäusebauteils 2 auf der der Gegendruckplatte 10 gegenüberliegenden Seite der Kupplungsscheibe 11, das heißt in Nachbarschaft zur Anpressplatte 7, angeordnet. Der Zentralflansch 4 ist fest mit dem Gehäusebauteil 2 verbunden, beispielsweise verschraubt, verstiftet oder verzahnt, kann aber auch einteilig mit dem Gehäusebauteil 2 ausgebildet sein. In seinem radialen Außenbereich weist der Zentralflansch 4 in Nachbarschaft zur Innenwand des Gehäusebauteils 2 mehrere, in Umfangsrichtung U verteilt angeordnete Aussparungen auf, durch die sich Anpressplattennocken 8 hindurch erstrecken.

Die Anpressplattennocken 8 sind einteilig mit der Anpressplatte 7 ausgebildet und erstrecken sich in axialer Richtung A der Kupplungsvorrichtung 1 von der der Gegendruckplatte 10 abgewandten Seite der Anpressplatte 7 durch die im Zentralflansch 4 vorgesehenen Aussparungen hindurch, um an einem Kraftrand eines Hebelelements 12 anzuliegen. Somit ist der Zentralflansch 4 in axialer Richtung A zwischen der Gegendruckplatte 10 und dem Hebelelement 12, genauer gesagt zwischen einer Reibfläche der Anpressplatte 7 und dem Hebelelement 12 angeordnet, wobei sich die Anpressplattennocken 8 der Anpressplatte 7 durch den Zentralflansch 4 hindurch erstrecken.

Über ein Zentrallager 6 stützt sich der Zentralflansch 4 in radialer Richtung R der Kupplungsvorrichtung 1 nach innen an einem Trägerbauteil 19 verdrehbar ab. Das Zentrallager 6 ist innerhalb eines vorspringenden Abschnitts 5 des Zentralflanschs 4 angeordnet, um sich am der Betätigungseinrichtung 18 zuzuordnenden Trägerbauteil 19 abzustützen. Das Zentrallager 6 ist vorzugsweise als Wälzlager, beispielsweise als ein- oder zweireihiges Kugellager, insbesondere Doppelschrägkugellager, ausgebildet, kann aber auch als zylindrisches Rollenlager, beispielsweise Kegelrollenlager, oder Gleitlager, ausgebildet sein.

In radialer Richtung R außerhalb des Zentrallagers 6 ist der Zentralflansch 4 fest mit einem Deckelbauteil 3 verbunden und von diesem beispielsweise mittels Stufenstiften beabstandet. In seinem radialen Außenbereich ist das Deckelbauteil 3 seinerseits am Gehäusebauteil 2 befestigt oder liegt zumindest an diesem an. Das Deckelbauteil 3 grenzt den drehmomentübertragenden Bereich der Kupplungsvorrichtung 1 in axialer Richtung A zur Betätigungseinrichtung 18 ab. Das Hebelelement 12 erstreckt sich im Wesentlichen in radialer Richtung R der Kupplungsvorrichtung 1 innerhalb des Gehäusebauteils 2 und in axialer Richtung A zwischen dem Deckelbauteil 3 und dem Zentralflansch 4. Das Hebelelement 12 weist vorzugsweise Aussparungen auf, durch die sich die Stufenstifte, die das Deckelbauteil 3 und den Zentralflansch 4 beabstanden, in axialer Richtung A hindurch erstrecken.

Das Hebelelement 12 kann für eine normal-eingerückte, in Figur 1 dargestellte Kupplungsvorrichtung 1 als Tellerfeder und für eine normal-ausgerückte Kupplungsvorrichtung als Hebelfeder ausgebildet sein. Das Hebelelement 12 ist gehäuseseitig abgestützt und durch die Betätigungseinrichtung 18 betätigbar. Hierzu weist das Hebelelement 12, das im Wesentlichen ringförmig ausgebildet ist, Zungen 13 auf, die sich in radialer Richtung R vom Kraftrand des Hebelelements 12 nach innen erstrecken. Zwischen Ausnehmungen der Zungen 13 erstrecken sich vorzugsweise die zuvor genannten Stufenstifte, die das Deckelbauteil 3 und den Zentralflansch 4 beabstanden. Die Zungen 13 sind mit einer Zug- und Schubeinrichtung 42 der Betätigungseinrichtung 18, auf die nachfolgend noch eingegangen wird, in Wirkverbindung bringbar, um die Kupplungsvorrichtung 1 einzurücken bzw. auszurücken.

Bei einer normal-eingerückten Kupplungsvorrichtung 1 überwiegt die wirksame Kraft des als Tellerfeder ausgebildeten Hebelelements 12 die Gegenkraft der Blattfedern 9, während bei einer normal-ausgerückten Kupplungsvorrichtung die Gegenkraft der Blattfedern 9 die wirksame Kraft des als Hebelfeder ausgebildeten Hebelelements überwiegt. Dementsprechend führt eine Betätigung der Tellerfeder der normal-eingerückten Kupplungsvorrichtung 1 durch die Betätigungseinrichtung 18 zum Ausrücken der Kupplungsvorrichtung 1 durch Verkippen bzw. Umschnappen der Tellerfeder, das heißt zum Abhub der Anpressplatte 7 und zur Entfernung der Anpressplatte 7 von der Gegendruckplatte 10, während eine Betätigung der Hebelfeder bei einer normal-ausgerückten Kupplungsvorrichtung durch die Betätigungseinrichtung zum Einrücken der Kupplungsvorrichtung durch Verkippen der Hebelfeder führt.

Bei eingerückter Kupplungsvorrichtung 1 wird ein Drehmoment von der Eingangsseite der Kupplungsvorrichtung 1, beispielsweise von einem Zweimassenschwungrad oder einem Verbrennungsmotor oder einem elektrischen Fahrmotor, über das Kupplungsgehäuse und sowohl die Gegendruckplatte 10 als auch die Anpressplatte 7, die beide mit dem Kupplungsgehäuse, insbesondere mit dem Gehäusebauteil 2, drehfest verbunden sind, reibschlüssig auf die Kupplungsscheibe 11 übertragen. Von der Kupplungsscheibe 11, die reibschlüssig zwischen der Gegendruckplatte 10 und der Anpressplatte 7 geklemmt ist, wird das Drehmoment zur Ausgangsseite der Kupplungsvorrichtung 1 übertragen, beispielsweise zu einer Eingangswelle eines Getriebes.

Insbesondere im Ausführungsbeispiel, das in Figur 1 dargestellt ist, und das vorzugsweise in einem hybriden Antriebsstrang eines Hybridfahrzeugs vorgesehen ist, sind jedoch auch andere Übertragungswege möglich. Beispielsweise kann die Kupplungsvorrichtung 1 als Zuschaltkupplung zum Zu- und Abkoppeln des Verbrennungsmotors an den und von dem hybriden Antriebsstrang ausgebildet sein. Hierzu kann der Verbrennungsmotor, genauer gesagt die Antriebswelle des Verbrennungsmotors oder die Ausgangsseite eines zwischen dem Verbrennungsmotor und der Kupplungsvorrichtung 1 angeordneten Zweimassenschwungrads, mit der Kupplungsscheibe 11 drehmomentübertragend verbunden sein.

Ein in Figur 1 nur ansatzweise dargestellter elektrischer Fahrmotor ist im Außenumfang der Kupplungsvorrichtung 1 derart angeordnet, dass ein Rotor des elektrischen Fahrmotors drehfest mit dem Gehäusebauteil 2 verbunden ist oder einteilig mit dem Gehäusebauteil 2 ausgebildet ist. Das Drehmoment des als Innenläufer ausgebildeten elektrischen Fahrmotors wirkt daher auch auf den Zentralflansch 4, die Anpressplatte 7 und die Gegendruckplatte 10, selbst wenn die Kupplungsvorrichtung 1 ausgerückt ist. Beim Einrücken der Kupplungsvorrichtung 1 kann das Drehmoment des elektrischen Fahrmotors dazu genutzt werden, den Verbrennungsmotor anzulassen. Ferner können bei eingerückter Kupplungsvorrichtung 1 das Drehmoment des elektrischen Fahrmotors und des Verbrennungsmotors zum Antrieb des Fahrzeugs benutzt werden. Gleichermaßen ist es möglich, bei eingerückter Kupplungsvorrichtung 1 ausschließlich mit dem Verbrennungsmotor zu fahren und den elektrischen Fahrmotor im Generatorbetrieb zu betreiben, um einen Akkumulator zu laden.

Da aufgrund des Reibschlusses sowohl Reibbeläge der Kupplungsscheibe 11 als auch in geringerem Maße Reibflächen der Gegendruckplatte 10 und der Anpressplatte 7 einem Verschleiß unterworfen sind, muss über die Lebensdauer der Kupplungsvorrichtung 1 die Anpressplatte 7 immer näher an die Gegendruckplatte 10 heranbewegt werden, um die Abnahme der Dicke der Reibbeläge und der Stärke der Reibflächen in axialer Richtung A zu kompensieren und den Reibschluss herstellen bzw. die Kupplungsvorrichtung 1 einrücken zu können. Hierzu ist die Kupplungsvorrichtung 1 im Ausführungsbeispiel, das in Figur 1 dargestellt ist, mit einer kraftbasierten Verschleißnachstelleinrichtung 14 ausgestattet. Die Verschleißnachstelleinrichtung 14 weist eine Sensorfeder 15 auf, die mittelbar oder unmittelbar zwischen dem Zentralflansch 4 und dem Hebelelement 12 verspannt ist. Ferner weist die Verschleißnachstelleinrichtung 14 einen Verstellring 17 auf, der zwischen dem Hebelelement 12 und dem Deckelbauteil 3 angeordnet ist, und dessen Rampen gleitbeweglich auf Gegenrampen angeordnet sind, die am Deckelbauteil 3 ausgebildet sind. Ferner ist der Verstellring 17 gegenüber dem Deckelbauteil 3 durch zumindest eine Antriebseinrichtung, insbesondere zumindest eine Antriebsfeder, derart in Umfangsrichtung U vorgespannt, dass die Rampen des Verstellrings 17 unter der Federvorspannung an den Gegenrampen des Deckelbauteils 3 hochgleiten können.

Wenn aufgrund von Kupplungsverschleiß insbesondere die Dicke der Reibbeläge der Kupplungsscheibe 11 abnimmt, drückt zum Einrücken der Kupplungsvorrichtung 1 das als Tellerfeder ausgebildete Hebelelement 12 die Anpressplatte 7 über die Anpressplattennocken 8 weiter in Richtung der Gegendruckplatte 10, das heißt mit Bezug auf Figur 1 nach rechts, um die Kupplungsscheibe 11 reibschlüssig zwischen der Anpressplatte 7 und der Gegendruckplatte 10 zu klemmen, das heißt die Kupplungsvorrichtung 1 einzurücken. Hierbei muss sich das Hebelelement 12 stärker aufstellen, wodurch das Kraftniveau des Hebelelements 12 steigt. Das gestiegene Kraftniveau des Hebelelements 12 sorgt beim Ausrücken der Kupplungsvorrichtung 1 dafür, dass die Sensorfeder 15 während des Ausrückvorgangs bei Durchlaufen des ersten Regelpunkts verlagert wird, das heißt der Kupplungsverschleiß sensiert wird, und dafür, dass sich das Hebelelement 12 durch die Verlagerung der Sensorfeder 15 vom in Umfangsrichtung U vorgespannten Verstellring 17 abhebt. Dadurch wird der Verstellring 17 klemmkraftfrei, so dass er sich unter Vorspannung der Antriebsfeder relativ zum Deckelbauteil 3 verdrehen kann, wobei die Rampen des Verstellrings 17 an den Gegenrampen des Deckelbauteils 3 so weit hochgleiten, bis der Verstellring 17 wieder mit dem Hebelelement 12 in Anlage kommt und somit geklemmt wird, das heißt, bis der Kupplungsverschleiß nachgestellt worden ist.

Um zu verhindern, dass der zweite Regelpunkt durchlaufen wird, bei dem es zu einer ungewollten Verschleißsensierung und -nachstellung kommen würde, ist das Hebelelement 12 mit dem Zentralflansch 4 in Anlage bringbar. Genauer gesagt sind die Zungen 13 des Hebelelements 12, insbesondere freie Enden der Zungen 13 des Hebelelements 12, mit dem Zentralflansch 4 in Anlage bringbar. Hierzu ist die Betätigungseinrichtung 18 am Zentralflansch 4 drehbar gelagert, und der in axialer Richtung A vorspringende Abschnitt 5 des Zentralflanschs 4, der im Bereich des Zentrallagers 6 ausgebildet ist, ist mit dem Hebelelement 12 in Anlage bringbar.

Obwohl in Figur 1 nur eine kraftbasierte Verschleißnachstelleinrichtung 14 dargestellt ist, sei an dieser Stelle erwähnt, dass auch eine wegbasierte Verschleißnachstelleinrichtung vorgesehen sein kann. Auch bei einer wegbasierten Verschleißnachstelleinrichtung kann der zuvor erläuterte Anschlag eine ungewollte Auslösung der Verschleißnachstellung im Überweg der Kupplungsvorrichtung 1 verhindern.

Im dargestellten Ausführungsbeispiel wirkt die Sensorfeder 15 mittelbar auf das Hebelelement 12, indem ein Drahtring 16 zwischen der Sensorfeder 15 und dem Hebelelement 12 vorgesehen ist. Der Drahtring 16 definiert eine Schwenklagerung, mittels derer das Hebelelement 12 zum Einrücken und Ausrücken der Kupplungsvorrichtung 1 verkippbar gelagert ist. Diese Schwenklagerung kann jedoch auch getrennt von der Verschleißnachstelleinrichtung 14 vorgesehen sein, beispielsweise indem sich der Drahtring 16 an den Stufenstiften oder am Zentralflansch 4 oder am Deckelbauteil 3 abstützt. Auch kann auf den Drahtring 16 gänzlich verzichtet werden, beispielsweise wenn am Zentralflansch 4 und/oder am Deckelbauteil 3 entsprechend gestaltete Auflagenocken ausgebildet sind, über die das Hebelelement 12 verschwenkt werden kann.

Die in der Kupplungsvorrichtung 1 vorgesehene Betätigungseinrichtung 18, die auf die Zungen 13 des Hebelelements 12 wirkt, weist eine Statoreinrichtung 20 und eine bezüglich der Statoreinrichtung 20 verdrehbare Rotoreinrichtung 22 auf. Beispielsweise kann die Statoreinrichtung 20 drehfest mit dem Trägerbauteil 19, insbesondere mit einem Gehäuseträger, ausgebildet sein. Vorzugsweise bilden die Statoreinrichtung 20 und die Rotoreinrichtung 22 einen Elektromotor, insbesondere einen bürstenlosen Gleichstrommotor oder einem Drehstrommotor. Hierzu ist die Statoreinrichtung 20 mit einer Stromzufuhr 21 versehen, um in nicht dargestellten, statorseitigen Spulen ein wechselndes elektromagnetisches Feld zu erzeugen. Die Rotoreinrichtung 22 weist zur magnetischen Wechselwirkung mit den statorseitigen Elektromagneten Magnete 23, genauer gesagt Permanentmagnete, auf.

Vorzugsweise ist der Elektromotor als sogenannter Außenläufer ausgebildet, das heißt die Statoreinrichtung 20 ist in radialer Richtung R der Kupplungsvorrichtung 1 innerhalb der Rotoreinrichtung 22 angeordnet. Es ist jedoch auch möglich, den Elektromotor als Innenläufer auszubilden, das heißt die Statoreinrichtung 20 in radialer Richtung R außerhalb der Rotoreinrichtung 22 anzuordnen.

Die in Figur 1 dargestellte Rotoreinrichtung 22 weist ein Joch 24 auf, das mit Bezug auf Figur 1 auf der rechten Seite in radialer Richtung R durch ein Stützlager 25 in der Nähe des Zentrallagers 6 am Trägerbauteil 19 abgestützt ist. Somit ist im dargestellten Ausführungsbeispiel das Stützlager 25 in axialer Richtung A der Kupplungsvorrichtung 1 auf der entgegengesetzten Seite der Stromzufuhr 21 für die Statoreinrichtung 20 angeordnet. Das Stützlager 25 kann mittelbar oder unmittelbar mit der Statoreinrichtung 20 verbunden sein. Das Stützlager 25 ist vorzugsweise als Wälzlager, insbesondere als Kugellager, vorzugsweise wie dargestellt als Doppelkugellager, ausgebildet. Jedoch ist auch ein zylindrisches Rollenlager oder ein Gleitlager möglich.

Zusätzlich zur Statoreinrichtung 20 und zur Rotoreinrichtung 22 weist die Betätigungseinrichtung 18 eine bezüglich der Rotoreinrichtung 22 in axialer Richtung A begrenzt verlagerbare, Zug- und Schubkräfte aufbringende Schlitteneinrichtung 26 auf. Die Schlitteneinrichtung 26 ist in radialer Richtung R außerhalb der Rotoreinrichtung 22 angeordnet. Die Schlitteneinrichtung 26 weist eine Außenhülse 27 auf, die auf Seiten der Stromzufuhr 21 für die Statoreinrichtung 20, das heißt mit Bezug auf Figur 1 auf der linken Seite, durch einen nicht als separates Bauteil dargestellten Deckel abgeschlossen ist. In axialer Richtung A zwischen der Außenhülse 27 und dem Deckel ist eine nicht als separates Bauteil dargestellte Ausgleichsscheibe angeordnet, um die axiale Länge des durch die Außenhülse 27 und den Deckel begrenzten Bauraums für eine Formfeder 31 eines Wälzkörpergewindetriebs 28, auf den nachfolgend noch eingegangen wird, zu definieren und einzustellen. Mittels mehrerer in Umfangsrichtung U der Kupplungsvorrichtung 1 angeordneter, nicht dargestellter Schrauben, ist der Deckel durch die Ausgleichsscheibe hindurch mit der Außenhülse 27 verschraubt.

In axialer Richtung A auf beiden Seiten der Schlitteneinrichtung 26 ist jeweils eine Dichtung 34, 35 vorgesehen, die den Raum, in dem die Formfeder 31 des Wälzkörpergewindetriebs 28 angeordnet ist, nach außen hin abdichtet. Die erste und zweite Dichtungen 34, 35 sind beispielsweise als ringförmige Lippendichtungen aus einem Elastomer oder einem gummi- bzw. kautschukhaltigen Material ausgebildet. In radialer Richtung R innerhalb ist die erste Dichtung 34 in gleitbeweglicher Anlage an einer ersten Innenhülse 36, während die zweite Dichtung 35 in gleitbeweglicher Anlage an einer zweiten Innenhülse 37 ist. Beide Innenhülsen 36, 37 sind mittelbar oder unmittelbar, vorzugsweise drehfest, mit der Statoreinrichtung 20 bzw. dem Trägerbauteil 19, insbesondere dem Gehäuseträger, verbunden. Durch die Innenhülsen 36, 37, die Dichtungen 34, 35, den Deckel und die Außenhülse 27 wird ein Fettraum 33 abgegrenzt, in dem die Formfeder 31 des Wälzkörpergewindetriebs 28 angeordnet ist.

In radialer Richtung R außerhalb der Außenhülse 27 ist ein Ausrücklager 38 vorgesehen. Ein Innenring 39 des Ausrücklagers 38 ist drehfest auf der Außenhülse 27 angebracht, beispielsweise aufgepresst, kann jedoch auch einteilig mit der Außenhülse 27 ausgebildet sein. Ein Außenring 40 des Ausrücklagers 38 ist verdrehbar zum Innenring 39 ausgebildet und drehfest in einer Lagerhülse 41 aufgenommen, beispielsweise eingepresst, oder einteilig mit der Lagerhülse 41 ausgebildet. Die Lagerhülse 41 kann ein oder zwei Bundabschnitte aufweisen, die eine oder beide Stirnseiten des Ausrücklagers 38 zumindest teilweise überdecken. Das Ausrücklager 38 ist im dargestellten Ausführungsbeispiel als einreihiges Kugellager ausgebildet, kann beispielsweise jedoch auch als mehrreihiges Kugellager, Schrägkugellager, Kegelrollenlager, zylindrisches Rollenlager oder Gleitlager ausgebildet sein. Über die Außenhülse 27, das Ausrücklager 38 und eine mit dem Ausrücklager 38 über die Lagerhülse 41 verbundene Zug- und Schubeinrichtung 42 wirkt die Schlitteneinrichtung 26 auf die in radialer Richtung R innen liegenden Zungen 13 des Hebelelements 12, um die Kupplungsvorrichtung auszurücken bzw. einzurücken. Hierfür können sowohl Zug- als auch Schubkräfte übertragen werden.

Der Wälzkörpergewindetrieb 28 ist vorzugsweise in radialer Richtung R zwischen Rotoreinrichtung 22 und der Schlitteneinrichtung 26 angeordnet. Im dargestellten Ausführungsbeispiel umfasst die Formfeder 31 des Wälzkörpergewindetriebs 28 fünfzehn Windungen, wobei prinzipiell jede Windungszahl größer/gleich 3 möglich ist.

Zusätzlich zur Formfeder 31 weist der Wälzkörpergewindetrieb 28 einen Wälzkörperumlauf mit einer Wälzkörperrinne 30 auf, in der, vorzugsweise über den gesamten Umfang verteilt, Wälzkörper 29 in einer Reihe, oder gegebenenfalls auch in mehreren, in axialer Richtung A voneinander beabstandeten Reihen, angeordnet sind. Die Wälzkörperrinne 30 kann einerseits als separates Bauteil mit der Rotoreinrichtung 22, insbesondere dem Joch 24, verbunden sein, kann aber auch einteilig mit der Rotoreinrichtung 22 bzw. dem Joch 24 ausgebildet sein. Insbesondere ist die Wälzkörperrinne 30 im Außenumfang der Rotoreinrichtung 22 bzw. des Jochs 24 ausgebildet, wenn der Antrieb der Betätigungseinrichtung 18 mittels eines Außenläufers erfolgt. Wenn der Antrieb der Betätigungseinrichtung 18 mittels eines Innenläufers erfolgt, ist es umgekehrt von Vorteil, wenn die Wälzkörperrinne 30 des Wälzkörperumlaufs im Innenumfang der Rotoreinrichtung 22 bzw. des Jochs 24 angeordnet ist.

Die Wälzkörper 29 laufen im Fettraum 33, der durch die Dichtungen 34, 35 in axialer Richtung A abgedichtet ist, und sind vorzugsweise als Kugeln ausgebildet. Jedoch ist es auch möglich, dass die Wälzkörper 29 als Nadeln ausgebildet sind bzw. eine Tonnen- oder Fassform aufweisen. Der Außenkontur der Wälzkörper 29 entsprechend weist die Formfeder 31 eine Anlagekontur auf, an der Oberflächenbereiche der Wälzkörper 29 anliegen. Dabei entspricht besagte Anlagekontur im Wesentlichen dem entsprechenden Oberflächenbereich des bzw. der Wälzkörper 29.

Im dargestellten Ausführungsbeispiel weisen die Windungen der Formfeder 21 zwei in axialer Richtung A voneinander beabstandete Anlagekonturen auf, die durch einen dazwischen liegenden Kamm voneinander getrennt sind. Die Formfeder 31 ist somit als innenkonturierte Formfeder 31 ausgebildet, da die Wälzkörper 29 in radialer Richtung R innerhalb der Formfeder 31 laufen. Umgekehrt ist es jedoch auch möglich, dass die Formfeder 31 bei Verwendung eines Innenläufers als außenkonturierte Formfeder 31 ausgebildet ist.

Die Wälzkörperrinne 30 des Wälzkörperumlaufs weist einen derart ausgebildeten, nicht dargestellten Spurwechselbereich auf, dass die Wälzkörper 29 in Umfangsrichtung U vor dem Spurwechselbereich in der Wälzkörperrinne 30 und in axialer Richtung A zwischen einer ersten und einer zweiten Windung 32a, 32b der Formfeder 31 laufen, und die Wälzkörper 29 in Umfangsrichtung U nach dem Spurwechselbereich in der Wälzkörperrinne 30 und in axialer Richtung A zwischen der zweiten und einer dritten Windung 32b, 32c der Formfeder 31 laufen. Zwischen der ersten und zweiten Windung 32a, 32b der Formfeder 31 ist somit eine erste Spur für die Wälzkörper 29 in Umfangsrichtung U definiert, während zwischen der zweiten und dritten Windung 32b, 32c der Formfeder 31 eine zweite Spur für die Wälzkörper 29 in Umfangsrichtung U definiert ist. An dieser Stelle sei darauf hingewiesen, dass die erste Windung 32a, die zweite Windung 32b und die dritte Windung 32c drei aufeinander folgende Windungen der Formfeder 31 darstellen, die in axialer Richtung A an beliebiger Stelle der Formfeder 31 ausgebildet sein können.

Je nach Position der Schlitteneinrichtung 29 überkreuzt sich die zweite Windung 32b mit dem Spurwechselbereich, wenn man die Betätigungseinrichtung 18 von der Seite betrachtet. Dabei ist es von Vorteil, wenn die zweite Windung 32b den Spurwechselbereich ausschließlich im Bereich der größten, in radialer Richtung R zu bestimmenden Tiefe der Wälzkörperrinne 30 kreuzt. Da die Wälzkörper 29 vorzugsweise aus Kugeln ausgebildet sind, ist die Wälzkörperrinne 30 vorzugsweise als umlaufende Kugelrinne ausgebildet. Im Spurwechselbereich ist sicherzustellen, dass die Wälzkörper 29, das heißt die Kugeln, in radialer Richtung R unter dem Kamm der zweiten Windung 32b der Formfeder 31 hindurchtauchen können, um den Spurwechsel von der einen Spur zwischen der ersten und zweiten Windung 32a, 32b zur anderen Spur zwischen der zweiten und dritten Windung 32b, 32c zu vollziehen. Hierzu ist es von Vorteil, wenn die maximale Tiefe des Spurwechselbereichs beim Kreuzen der zweiten Windung 32b der Formfeder 31 im Wesentlichen gleich dem Durchmesser der Kugeln ist. Vorzugsweise ist die maximale Tiefe des Spurwechselbereichs größer als der Durchmesser der Kugeln, damit diese vollständig in die Kugelrinne eintauchen können und den Kamm der zweiten Windung 32b der Formfeder 31 mit Sicherheit nicht berühren.

Im Betrieb der Betätigungseinrichtung 18 führt eine Drehung der Rotoreinrichtung 22 durch entsprechende Bestromung der Statoreinrichtung 20 zu einer Drehung des Wälzkörperumlaufs bzw. der Wälzkörperrinne 30 um die Drehachse Z der Kupplungsvorrichtung 1. Die Wälzkörper 29 durchlaufen innerhalb des Wälzkörpergewindetriebs 28 in die Spuren zwischen der ersten und zweiten Windung 32a, 32b der Formfeder 31 und zwischen der zweiten und dritten Windung 32b, 32c der Formfeder 31, während die Wälzkörper 29 in der Wälzkörperrinne 30 umlaufen, wodurch sich die Spuren in axialer Richtung A bewegen, und die rotatorische Bewegung der Rotoreinrichtung 22 in eine translatorische Bewegung der Schlitteneinrichtung 26, in der die Formfeder 31 axial fest gelagert ist, umgesetzt wird. Die translatorische Bewegung der Schlitteneinrichtung 26 kann zur mittelbaren oder unmittelbaren Betätigung der Kupplungsvorrichtung 1 verwendet werden. Durch ihren Aufbau ist die Betätigungseinrichtung 18 in der Lage, sowohl Zugkräfte als auch Schubkräfte zu übertragen.

Da der Wälzkörpergewindetrieb 28 vorzugsweise selbsthemmend ausgebildet ist, ist eine Bestromung der Statoreinrichtung 20 vorzugsweise lediglich erforderlich, wenn der Betriebszustand der Kupplungsvorrichtung 1 zu ändern ist. Die Bestromung kann in beide Drehrichtungen der Rotoreinrichtung 22 erfolgen, wobei in einer Drehrichtung die Kupplungsvorrichtung 1 eingerückt wird und in der entgegengesetzten Drehrichtung die Kupplungsvorrichtung 1 ausgerückt wird. Bei einer mitdrehenden Statoreinrichtung 20 sind jedoch auch andere Arten der Bestromung möglich.

Um sowohl Zugkräfte als auch Schubkräfte auf die Zungen 13 des im Wesentlichen ringförmig ausgebildeten Hebelelements 12 übertragen zu können, weist die Zug- und Schubeinrichtung 42 sowohl ein im Wesentlichen ringförmiges Zugelement 44 als auch ein im Wesentlichen ringförmiges Schubelement 43 auf. Die Zungen 13 des Hebelelements 12 sind in axialer Richtung A zwischen dem Schubelement 43 und dem Zugelement 44 angeordnet. Das Schubelement 43 und das Zugelement 44 sind derart angeordnet, dass bei Betätigung der Betätigungseinrichtung 18 die Zungen 13 des Hebelelements 12 mit dem Schubelement 43 und dem Zugelement 44 abwechselnd und vorzugsweise nicht gleichzeitig in Anlage bringbar sind. Hierzu sind das Schubelement 43 und das Zugelement 44 durch Schraube-Hülse-Verbindungen 46 in axialer Richtung A voneinander beabstandet und miteinander verbunden. Vorzugsweise erfolgt die Verbindung mittels mehrerer in Umfangsrichtung U verteilt angeordneter Schraube-Hülse-Verbindungen 46 lösbar, das heißt insbesondere zerstörungsfrei lösbar.

Die Zug- und Schubeinrichtung 42, genauer gesagt das Schubelement 43 und das Zugelement 44 sind in axialer Richtung A zwischen dem Ausrücklager 38 und dem Zentralflansch 4 angeordnet. Der Zentralflansch 4 ist in axialer Richtung A zwischen der Zug- und Schubeinrichtung 42 und der Gegendruckplatte 10, genauer gesagt zwischen der Zug- und Schubeinrichtung 42 und der eigentlichen Anpressplatte 7 ohne die Anpressplattennocken 8 angeordnet. Das Zugelement 44 ist in axialer Richtung A näher am Zentralflansch 4 angeordnet als das Schubelement 43.

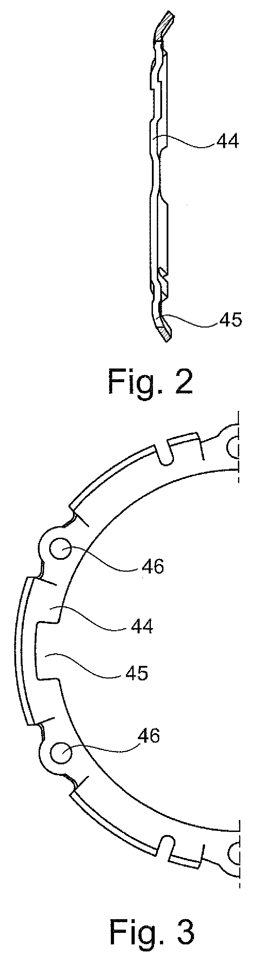

Die Zug- und Schubeinrichtung 42 weist mehrere, in Umfangsrichtung U verteilt angeordnete Aussparungen 45 auf, durch die das Hebelelement 12 mit dem Zentralflansch 4 in Anlage bringbar ist, um insbesondere bei der zuvor erläuterten, kraftbasierten Verschleißnachstelleinrichtung 14 ein Durchlaufen des zweiten Regelpunkts zu verhindern. Genauer gesagt weist das Zugelement 44 mehrere in Umfangsrichtung U verteilt angeordnete Aussparungen 45 auf, durch die das Hebelelement 12 mit dem Zentralflansch 4 in Anlage bringbar ist. Diese Aussparungen 45 sind in Umfangsrichtung U zwischen den Schraube-Hülse-Verbindungen 46 angeordnet, wobei in Figur 3 die Löcher für die Schraube-Hülse-Verbindungen 46 mit dem entsprechenden Bezugszeichen 46 versehen sind. Die Aussparungen 45 sind vorzugsweise am Innenrand des ringförmigen Zugelements 44 ausgebildet.

Die vorangegangenen Ausführungsbeispiele betreffen eine Kupplungsvorrichtung 1, insbesondere eine Zuschaltkupplung für einen Verbrennungsmotor eines Hybridfahrzeugs, mit einer Gegendruckplatte 10, einer in axialer Richtung A begrenzt verlagerbaren Anpressplatte 7 zur reibschlüssigen Klemmung einer Kupplungsscheibe 11 zwischen der Anpressplatte 7 und der Gegendruckplatte 10, einem auf die Anpressplatte 7 wirkenden Hebelelement 12 zur Verlagerung der Anpressplatte 7 in axialer Richtung A, einem zumindest teilweise zwischen der Anpressplatte 7 und dem Hebelelement 12 angeordneten Zentralflansch 4 mit zumindest einer Durchgriffsmöglichkeit für die Anpressplatte 7 und/oder das Hebelelement 12, und einer Verschleißnachstelleinrichtung 14 zur automatischen Nachstellung von Kupplungsverschleiß, wobei zur Verhinderung einer ungewollten Nachstellung von Kupplungsverschleiß das Hebelelement 12 mit dem Zentralflansch 4 in Anlage bringbar ist.

### Bezugszeichenliste

- 1: Kupplungsvorrichtung
- 2: Gehäusebauteil
- 3: Deckelbauteil
- 4: Zentralflansch
- 5: vorspringender Abschnitt
- 6: Zentrallager
- 7: Anpressplatte
- 8: Anpressplattennocken
- 9: Blattfeder
- 10: Gegendruckplatte
- 11: Kupplungsscheibe
- 12: Hebelelement
- 13: Zunge
- 14: Verschleißnachstelleinrichtung
- 15: Sensorfeder
- 16: Drahtring
- 17: Verstellring
- 18: Betätigungseinrichtung
- 19: Trägerbauteil
- 20: Statoreinrichtung
- 21: Stromzufuhr
- 22: Rotoreinrichtung
- 23: Magnet
- 24: Joch
- 25: Stützlager
- 26: Schlitteneinrichtung
- 27: Außenhülse
- 28: Wälzkörpergewindetrieb
- 29: Wälzkörper
- 30: Wälzkörperrinne
- 31: Formfeder
- 32a: erste Windung
- 32b: zweite Windung
- 32c: dritte Windung
- 33: Fettraum
- 34: erste Dichtung
- 35: zweite Dichtung
- 36: erste Innenhülse
- 37: zweite Innenhülse
- 38: Ausrücklager
- 39: Innenring
- 40: Außenring
- 41: Lagerhülse
- 42: Zug- und Schubeinrichtung
- 43: Schubelement
- 44: Zugelement
- 45: Aussparung
- 46: Schraube-Hülse-Verbindung
- A: axiale Richtung
- R: radiale Richtung
- U: Umfangsrichtung
- Z: Drehachse

## Patentansprüche

1. Kupplungsvorrichtung (1), die aufweist:
eine Gegendruckplatte (10),
eine Kupplungsscheibe (11),
eine in axialer Richtung (A) begrenzt verlagerbare Anpressplatte (7) zur reibschlüssigen Klemmung der Kupplungsscheibe (11) zwischen der Anpressplatte (7) und der Gegendruckplatte (10),
ein auf die Anpressplatte (7) wirkendes Hebelelement (12) zur Verlagerung der Anpressplatte (7) in axialer Richtung (A), einen zumindest teilweise zwischen der Anpressplatte (7) und dem Hebelelement (12) angeordneten Zentralflansch (4) mit zumindest einer Durchgriffsmöglichkeit für die Anpressplatte (7) und/oder das Hebelelement (12), und
eine Verschleißnachstelleinrichtung (14) zur automatischen Nachstellung von Kupplungsverschleiß, wobei
zur Verhinderung einer ungewollten Nachstellung von Kupplungsverschleiß das Hebelelement (12) mit dem Zentralflansch (4) in Anlage bringbar ist,
**gekennzeichnet durch**
eine Betätigungseinrichtung (18) mit einer Statoreinrichtung (20), einer bezüglich der Statoreinrichtung (20) verdrehbaren Rotoreinrichtung (22) und einer bezüglich der Rotoreinrichtung (22) in axialer Richtung (A) begrenzt verlagerbaren, Zug- und Schubkräfte aufbringenden Schlitteneinrichtung (26), die sich mit einer auf das Hebelelement (12) Zug- und Schubkräfte aufbringenden Zug- und Schubeinrichtung (42) in Wirkverbindung befindet.

2. Kupplungsvorrichtung (1) nach Anspruch 1, wobei das Hebelelement (12) im Wesentlichen ringförmig ausgebildet ist und in radialer Richtung (R) innen angeordnete Zungen (13) aufweist, die mit dem Zentralflansch (4) in Anlage bringbar sind.

3. Kupplungsvorrichtung (1) nach Anspruch 1 oder 2, wobei die Betätigungseinrichtung (18) mittels eines Zentrallagers (6) drehbar an dem Zentralflansch (4) gelagert ist und der Zentralflansch (4) im Bereich des Zentrallagers (6) einen in axialer Richtung (A) vorspringenden Abschnitt (5) aufweist, mit dem das Hebelelement (12) in Anlage bringbar ist.

4. Kupplungsvorrichtung (1) nach einem der Ansprüche 1 bis 3, wobei die Zug- und Schubeinrichtung (42) zumindest eine Aussparung (45) aufweist, durch die das Hebelelement (12) mit dem Zentralflansch (4) in Anlage bringbar ist.

5. Kupplungsvorrichtung (1) nach einem der Ansprüche 1 bis 4, wobei die Zug- und Schubeinrichtung (42) zumindest ein Zugelement (44) und zumindest ein Schubelement (43) aufweist, zwischen denen das Hebelelement (12) aufnehmbar ist und die miteinander verbindbar sind.

6. Kupplungsvorrichtung (1) nach Anspruch 5, wobei das Zugelement (44) zumindest eine Aussparung (45) aufweist, durch die das Hebelelement (12) mit dem Zentralflansch (4) in Anlage bringbar ist.

7. Kupplungsvorrichtung (1) nach Anspruch 5 oder 6, wobei das Zugelement (44) und das Schubelement (43) mittels mehrerer in Umfangsrichtung (U) verteilt angeordneter Schraube-Hülse-Verbindungen (46) lösbar miteinander verbunden sind.

8. Kupplungsvorrichtung (1) nach Anspruch 7, wobei das Zugelement (44) mehrere in Umfangsrichtung (U) verteilt angeordnete Aussparungen (45) aufweist, durch die das Hebelelement (12) mit dem Zentralflansch (4) in Anlage bringbar ist und die zwischen den Schraube-Hülse-Verbindungen (46) angeordnet sind.

9. Kupplungsvorrichtung (1) nach einem der Ansprüche 1 bis 8, wobei
zwischen der Rotoreinrichtung (22) und der Schlitteneinrichtung (26) ein Wälzkörpergewindetrieb (28) mit zumindest drei Windungen (32a, 32b, 32c) und einem Wälzkörperumlauf mit in einer Wälzkörperrinne (30) laufenden Wälzkörpern (29) vorgesehen ist, und
die Wälzkörperrinne (30) einen derart ausgebildeten Spurwechselbereich aufweist, dass Wälzkörper (29) vor dem Spurwechselbereich in Umfangsrichtung (U) zwischen einer ersten und einer zweiten Windung (32a, 32b) laufen, und Wälzkörper (29) nach dem Spurwechselbereich in Umfangsrichtung (U) zwischen der zweiten und einer dritten Windung (32b, 32c) laufen.

## Claims

1. Clutch device (1) comprising:
a counter plate (10),
a clutch disk (11),
a pressure plate (7) displaceable in axial direction (A) to a limited extent for frictionally clamping the clutch disk (11) between the pressure plate (7) and the counter plate (10),
a lever element (12) acting on the pressure plate (7) for displacing the pressure plate (7) in axial direction (A), a central flange (4) at least partially arranged between the pressure plate (7) and the lever element (12) and having at least one lead-through option for the pressure plate (7) and/or the lever element (12), and
wear adjusting means (14) for automatically adjusting clutch wear, wherein
the lever element (12) being contactable to central flange (4) for preventing undesired adjustment of clutch wear,
**characterized by**
actuating means (18) having stator means (20), rotor means (22) rotatable with respect to the stator means (20), and a carriage means (26) displaceable in axial direction (A) to a limited extent with respect to the rotor means (22), applying pulling and pushing forces,
and operatively connected to push/pull means (42) applying pulling and pushing forces to the lever element (12).

2. Clutch device (1) according to Claim 1, wherein the lever element (12) being of substantially annular configuration and having fingers (13) arranged inwardly in radial direction (R) and contactable to the central flange (4).

3. Clutch device (1) according to Claim 1 or 2, wherein the actuating means (18) being mounted rotatably on the central flange (4) by a central bearing (6), and the central flange (4) having a portion (5) projecting in axial direction (A) in a region of the central bearing (6), the lever element (12) being contactable to the portion (5).

4. Clutch device (1) according to one of Claims 1 to 3, wherein the push/pull means (42) having at least one recess (45), through which the lever element (12) is contactable to the central flange (4).

5. Clutch device (1) according to one of Claims 1 to 4, wherein the push/pull means (42) having at least one pulling element (44) and at least one pushing element (43) adapted to receive the lever element (12) therebetween and connectable to each other.

6. Clutch device (1) according to Claim 5, wherein the pulling element (44) having at least one recess (45), through which the lever element (12) is contactable to the central flange (4).

7. Clutch device (1) according to Claim 5 or 6, wherein the pulling element (44) and the pushing element (43) being connected releasably to one another by a plurality of screw/sleeve connections (46) distributively arranged in circumferential direction (U).

8. Clutch device (1) according to Claim 7, wherein the pulling element (44) having a plurality of recesses (45) distributively arranged in circumferential direction (U), through which the lever element (12) is contactable to the central flange (4) and being arranged between the screw/sleeve connections (46).

9. Clutch device (1) according to one of Claims 1 to 8, wherein
a rolling body screw drive (28) having at least three windings (32a, 32b, 32c) and a rolling body circulation means having rolling bodies (29) running in a rolling body channel (30) being provided between the rotor means (22) and the carriage means (26), and
the rolling body channel (30) having a track changing region configured such that rolling bodies (29) run between a first and a second winding (32a, 32b) upstream of the track changing region in circumferential direction (U), and rolling bodies (29) run between the second and a third winding (32b, 32c) downstream of the track changing region in circumferential direction (U).

## Revendications

1. Dispositif d'embrayage (1), présentant :
une plaque de contrepression (10),
un disque d'embrayage (11),
une plaque de pression (7) déplaçable de manière limitée dans la direction axiale (A) pour le serrage par engagement par friction du disque d'embrayage (11) entre la plaque de pression (7) et la plaque de contrepression (10),
un élément de levier (12) agissant sur la plaque de pression (7) pour le déplacement de la plaque de pression (7) dans la direction axiale (A), une bride centrale (4) disposée au moins en partie entre la plaque de pression (7) et l'élément de levier (12), avec au moins une possibilité d'engagement pour la plaque de pression (7) et/ou l'élément de levier (12), et
un dispositif de rattrapage de l'usure (14) pour le rattrapage automatique de l'usure de l'embrayage,
l'élément de levier (12) pouvant être amené en appui contre la bride centrale (4) pour empêcher un rattrapage non souhaité de l'usure de l'embrayage,
**caractérisé par**
un dispositif d'actionnement (18) avec un dispositif de stator (20), un dispositif de rotor (22) pouvant tourner par rapport au dispositif de stator (20) et un dispositif de chariot (26) déplaçable de manière limitée par rapport au dispositif de rotor (22) dans la direction axiale (A), exerçant des forces de traction et de poussée, qui est en liaison fonctionnelle avec un dispositif de traction et de poussée (42) exerçant des forces de traction et de poussée sur l'élément de levier (12).

2. Dispositif d'embrayage (1) selon la revendication 1, dans lequel l'élément de levier (12) est réalisé sous forme essentiellement annulaire et présente dans la direction radiale (R) des langues (13) disposées à l'intérieur, qui peuvent être amenées en appui contre la bride centrale (4).

3. Dispositif d'embrayage (1) selon la revendication 1 ou 2, dans lequel le dispositif d'actionnement (18) est supporté au moyen d'un palier central (6) de manière rotative sur la bride centrale (4) et la bride centrale (4) présente, dans la région du palier central (6), une portion (5) faisant saillie dans la direction axiale (A), qui peut être amenée en appui contre l'élément de levier (12).

4. Dispositif d'embrayage (1) selon l'une quelconque des revendications 1 à 3, dans lequel le dispositif de traction et poussée (42) présente au moins un évidement (45), à travers lequel l'élément de levier (12) peut être amené en appui contre la bride centrale (4).

5. Dispositif d'embrayage (1) selon l'une quelconque des revendications 1 à 4, dans lequel le dispositif de traction et poussée (42) présente au moins un élément de traction (44) et au moins un élément de poussée (43) entre lesquels l'élément de levier (12) peut être reçu, et qui peuvent être reliés l'un à l'autre.

6. Dispositif d'embrayage (1) selon la revendication 5, dans lequel l'élément de traction (44) présente au moins un évidement (45) à travers lequel l'élément de levier (12) peut être amené en appui contre la bride centrale (4).

7. Dispositif d'embrayage (1) selon la revendication 5 ou 6, dans lequel l'élément de traction (44) et l'élément de poussée (43) sont connectés l'un à l'autre de manière amovible au moyen de plusieurs connexions à douille et vis (46) réparties dans la direction périphérique (U).

8. Dispositif d'embrayage (1) selon la revendication 7, dans lequel l'élément de traction (44) présente plusieurs évidements (45) répartis dans la direction périphérique (U), à travers lesquels l'élément de levier (12) peut être amené en appui contre la bride centrale (4) et qui sont disposés entre les connexions à douille et vis (46).

9. Dispositif d'embrayage (1) selon l'une quelconque des revendications 1 à 8, dans lequel entre le dispositif de rotor (22) et le dispositif de chariot (26) est prévue une vis d'entraînement à corps de roulement (28) comprenant au moins trois spires (32a, 32b, 32c) et une circulation de corps de roulement avec des corps de roulement (29) roulant dans un chemin de corps de roulement (30), et
le chemin de corps de roulement (30) présente une région de changement de voie réalisée de telle sorte que des corps de roulement (29) roulent avant la région de changement de voie dans la direction périphérique (U) entre une première et deuxièmes spire (32a, 32b) et que les corps de roulement (29), après la région de changement de voie, roulent dans la direction périphérique (U) entre la deuxième et une troisième spire (32b, 32c).
